# EUROPÄISCHE PATENTSCHRIFT

(11) **EP 0 701 592 B1**
(45) Veröffentlichungstag und Bekanntmachung des Hinweises auf die Patenterteilung: **04.08.1999**
(21) Anmeldenummer: 94911922.6
(22) Anmeldetag: 18.03.1994
(51) Int. Cl.: C09J 175/06, C09J 7/02, C08K 5/00

(54) **KASCHIERDISPERSION**
LAMINATE-GLUEING DISPERSION
DISPERSION DE CONTRECOLLAGE

(30) Priorität: 18.03.1993 DE 9304018 U
(43) Veröffentlichungstag der Anmeldung: 20.03.1996
(73) Patentinhaber: H.B. FULLER LICENSING & FINANCING, INC., Saint Paul, Minnesota 55110-5132 (US)
(72) Erfinder: ARNOLD, Christian, W., D-85635 Höhenkirchen (DE); PIMPL, Werner, H., D-81737 München (DE)
(74) Vertreter: Maiwald, Walter, Dr. Dipl.-Chem.
(86) Internationale Anmeldenummer: EP9400860
(87) Internationale Veröffentlichungsnummer: WO9421743

(56) Entgegenhaltungen:
- EP-A- 0 118 726
- EP-A- 0 307 546
- EP-A- 0 330 272
- EP-A- 0 367 120

## Beschreibung

Die Erfindung betrifft wässrige Dispersionen bzw. Dispersionsklebstoffe der in den Oberbegriffen der Ansprüche 1 und 2 definierten Arten.

Zum Kaschieren von Trägerteilen mit Textilien, Folien und anderen flexiblen flächigen bzw. bahnartigen Materialien wurden seit langem Zweikomponentenklebstoffe auf der Basis nichtwässriger Lösungsmittel eingesetzt. Jedoch sind auch seit längerem bereits wässrige Dispersionsklebstoffe bekannt, die als Ersatz für solche lösungsmittelhaltigen Klebstoffe dienen. So werden zum Beispiel in der Automobilindustrie bei der Fertigung von Armaturenbrettern und anderen Teilen der Innenausstattung PVC-Folien mit solchen wässrigen zweikomponentigen Dispersionen auf saugfähige Träger, beispielsweise aus Spanmaterial aufkaschiert. Hierbei finden insbesondere polyurethanmodifizierte Dispersionen Verwendung, da sie besonders wärmefest sind. Bei diesen Klebstoffen wird eine wässrige Dispersion, die wenigstens eine hydroxylgruppenhaltige Polymerverbindung und daneben Farb- und andere Hilfsstoffe enthalten kann, mit einem in Wasser dispergierbaren Härter vermischt, der ein di- oder polyfunktionelles Isocyanat umfaßt. Die Dispersion wird dann auf das zu verklebende Substrat aufgebracht, (üblicherweise aufgesprüht) und dann, nach Ablüften, durch Erwärmung reaktiviert, was die Verbindung mit dem anderen Substrat des Kaschierungsteils durch Verpressen ermöglicht.

Die Dispersion muß nicht immer zweikomponentig sein und kann vielmehr mehrere hydroxylgruppenhaltige Polymerverbindungen nebeneinander enthalten.

Es ist bereits bekannt, Polyurethandispersionen durch Zugabe von anderen Polymeren zur Dispersion abzuwandeln, da die Polyurethankomponente relativ teuer ist und reine Polyurethandispersionen sich schlecht durch Sprühverfahren auftragen lassen. So kann durch Zugabe von Ethylenvinylacetat (EVA) Copolymeren zur Dispersion die Spritzfähigkeit verbessert werden. Dabei nimmt allerdings die Wärmefestigkeit der Verklebungen deutlich ab. Alternativ ist bekannt, Polyurethandispersionen mit einem Acrylatgehalt zu versehen. Dies führt allerdings zu Problemen bei der Verklebung von Materialien mit hohen Weichmachergehalten wie beispielsweise den in der Automobil- und Möbelindustrie gerne verwendeten, besonders weichen PVC-Folien, da es zur Wanderung von Weichmacherverbindungen aus dem Substrat in die Klebeschicht kommt, was die Beständigkeit der Klebeverbindung deutlich vermindert.

Zum geforderten Eigenschaftsbild aller solcher Klebstoffe gehören die Eignung zum Auftrag im Sprühverfahren, niedrige Reaktivierungstemperaturen, lange Topfzeiten und, nach dem Aushärten, hohe Wärmefestigkeiten und die Beständigkeit gegen aus dem Substrat stammende Weichmacheranteile.

Keiner der vorstehend beschriebenen bekannten Klebstoffe entspricht allen diesen Anforderungen optimal.

Bei den bekannten zweikomponentigen polyurethanmodifizierten Dispersionen hat sich insbesondere als nachteilig gezeigt, daß sie das Eigenschaftsbild der lösungsmittelhaltigen Zweikomponentenpolyurethanklebstoffe, als deren Ersatz sie entwickelt wurden, nicht in vollem Umfang erreichen. Insbesondere sind die Anfangs- und Langzeitwärmefestigkeitswerte der Verklebungen sowie die Topfzeiten der Dispersionen nach Härterzugabe deutlich schlechter als bei den Produkten auf der Basis nicht wässriger Lösungsmittel. Insbesondere störend ist im industriellen Mehrschichtbetrieb die allzu kurze Topfzeit, die zur Unterbrechung des Produktionsablaufes durch häufig notwendige Reinigungsarbeiten führt.

Es ist vor diesem Hintergrund eine wesentliche Aufgabe der Erfindung, verbesserte Kaschierdispersionen zu schaffen, die bessere Langzeitwärmefestigkeiten und längere Topfzeiten aufweisen, so daß ein unterbrechungsfreies Arbeiten zumindest im Zweischichtbetrieb möglich ist.

Es ist eine weitere wesentliche Aufgabe der Erfindung, verbesserte Kaschierdispersionen anzugeben, die möglichst geringe Polyurethananteile aufweisen und eine entsprechende Kostenersparnis ermöglichen, ohne die Vorteile bekannter polyurethanmodifizierter Dispersionen einzubüßen.

Eine weitere wesentliche Aufgabe der Erfindung liegt in der Schaffung verbesserter Kaschierdispersionen, die eine größere Beständigkeit gegen aus dem Substrat stammende Weichmacheranteile zeigen.

Es wurde nun überraschend gefunden, daß die Beständigkeit von Verklebungen mittels Dispersionen der eingangs genannten Art gegen aus dem Substrat stammende Weichmacheranteile dadurch verbessert werden kann, daß der Dispersion vor der Verklebung Weichmacher zugesetzt werden.

Es wurde weiterhin überraschend gefunden, daß polyurethanmodifizierte Zwei- oder Mehrkomponentendispersionen eine deutlich längere Topfzeit zeigen, wenn sie EVA Copolymer und Polyacrylat nicht, wie bisher, alternativ, sondern nebeneinander enthalten.

Als besonders vorteilhaft erweist es sich, polyurethanmodifizierte Zwei- oder Mehrkomponentendispersionen sowohl mit wenigstens einem EVA Copolymer als auch wenigstens einem Polyacrylat und zusätzlich mit einem Weichmacher zu versehen. Solche Dispersionen zeigen eine erheblich gesteigerte Langzeitwärmefestigkeit, erheblich verlängerte Topfzeiten, hohe Anfangsfestigkeiten und hohe Endfestigkeiten, im Vergleich mit bekannten Polyurethan/Acrylatdispersionen ohne Weichmacher und EVA Copolymer. Die mit solchen erfindungsgemäßen Dispersionen hergestellten Verklebungen sind genauso resistent gegen aus dem Substrat stammende Weichmacherteile wie bekannte Zweikomponentenklebstoffe auf der Basis nicht wässriger Lösungsmittel und sehr viel resistenter gegen solche Weichmachereinflüsse als herkömmliche wässrige Zweikomponentendispersionsklebstoffe. Auch im Klimawechseltest zeigen sich solche erfindungsgemäßen Dispersionen den bekannten wässrigen Polyurethan/Acrylatdispersionsklebstoffen überlegen.

Die erfindungsgemäßen Dispersionen lassen sich auf der Basis handelsüblicher Produkte erzeugen.

So kann für den Polyurethananteil der Dispersion das Handelsprodukt "DISPERCOLL" der Bayer AG verwendet werden. Für den EVA-Anteil der Dispersion lassen sich beispielsweise die unter der Produktbezeichnung "WINAPAS" von Wacker und die unter der Bezeichnung "WINNAMUL" von der gleichnamigen Firma erhältlichen Produkte verwenden. Geeignete hydroxylgruppenhaltige Acrylatdispersionen sind von den Vereinigten Ürdinger Ölwerken Alberding und Co. erhältlich. Als Weichmacher eignen sich insbesondere estergruppenhaltige Produkte, speziell Butyl- und Benzylpthalate, wie von der Firma Monsanto erhältlich.

Als Isocyanatkomponente (Härter) lassen sich die von der Bayer AG erhältlichen "Desmodur" (Wz)-Produkte anwenden.

Um eine besonders günstige Verarbeitbarkeit zu erhalten, kann es sich empfehlen, die gegebenenfalls vorgesehene EVA-Komponente aus unterschiedlichen Produkten zusammenzusetzen, die die nötigen Festigkeitseigenschaften bei gleichzeitig guter Versprühbarkeit bewirken.

Die schon genannten Polyacrylatanteile in den erfindungsgemäßen Dispersionen lassen sich ganz oder teilweise durch übliche Ersatzstoffe wie Methacrylate oder auch (teil) hydrolisiertes Polyacrylnitril ersetzen.

Der Polyurethangehalt der erfindungsgemäßen Dispersionen liegt vorzugsweise zwischen 5 % und 25 % und besonders bevorzugt zwischen 15 % und 20 %.

Sofern überhaupt vorhanden, kann der EVA-Anteil in der Dispersion bis zu 85 % betragen; vorzugsweise liegt er zwischen 40 % und 80 % und besonders bevorzugt zwischen 65 % und 75 %.

Der Anteil von Polyacrylat bzw. den schon genannten Austauschstoffen in der Dispersion liegt generell zwischen 0 % und 40 %, vorzugsweise zwischen 5 % und 30 % und besonders bevorzugt zwischen 5 % und 10 %.

Der Weichmachergehalt in der Dispersion liegt generell zwischen 0 % und 20 %, vorzugsweise zwischen 5 % und 15 % und besonders bevorzugt zwischen 5 % und 10 %.

Im folgenden werden einige Ausführungsbeispiele der Erfindung angegeben, und zwar für die besonders bevorzugte Variante, bei welcher die Dispersion neben Polyurethan auch EVA Copolymere, Polyacrylat und estergruppenhaltigen Weichmacher enthält.

Die Beispiele 1 und 2 sind erfindungsgemäße Dispersionen; das Beispiel 3 (Vergleichsbeispiel) ist eine typische, dem Stand der Technik angehörige polyurethanmodifizierte Zweikomponentendispersion mit Polyacrylatanteil.

| Beispiel 1 | |
|---|---|
| Polyurethandispersion | 17,5 % |
| EVA-Dispersion | 69,0 % |
| Acrylat-Dispersionen | 7,5 % |
| Weichmacher | 5,0 % |
| Stabilisatoren, Farb- und Hilfsstoffe | 1,0 % |
| Festkörperanteil | 56 % |
| Viskosität Brookfield HBT | 2,200 mPa x s |

| Beisiel 2 | |
|---|---|
| Polyurethandispersion | 9,0 % |
| EVA-Dispersionen | 64,6 % |
| Acrylat-Dispersion | 21.0 % |
| Weichmacher | 5,0 % |
| Stabilisatoren, Farb- und Hilfsstoffe | 0,4 % |
| Festkörperanteil | xx % |
| Viskosität Brookfield HBT | 2.780 mPa x s |

| Beispiel 3 | |
|---|---|
| Polyurethandispersion | 59,5 % |
| Acrylat-Dispersion | 40,07 % |
| Stabilisatoren, Farb-Hilfsstoffe | 0,43 % |
| Festkörperanteil | 45,2 % |
| Viskosität Brookfield HBT | 1.400 mPa xs. |

Die Dispersionen der Beispiele 1 bis 3 wurden nun mit Härter (Desmodur) gemischt und zwar im Verhältnis 100 Teile Dispersion auf 6 Teile Härter.

Nachfolgend wurde die Viskositätsänderung der Mischung zur Abschätzung der Topfzeit gemessen. Dabei konnte die Topfzeit als überschritten angesehen werden, wenn die Viskositätsänderung 100 % der Anfangswertes überstieg und eine Verklebung im 180° Peeltest (Zug-Schältest) einen Wert von weniger als 3 N/3 cm bei der Bestimmung der Endfestigkeit zeigte.

Die Anfangsfestigkeit, die Endfestigkeit und die Langzeitwärmefestigkeit wurden dadurch bestimmt, daß die wie beschrieben angemischten Klebstoffe einseitig auf ein Trägerteil mit den Abmessungen 15 cm x 3 cm in einer Schichtdecke von 60 µ aufgerakelt wurden.

Zur Bestimmung der Anfangsfestigkeit wurde nach einer Ablüftzeit von 30 Minuten das so beschichtete Trägerteil mit einer Laminierfolie bei Raumtemperatur verpresst und die Folie 10 Sekunden nach dem Verpressen einem 180° Peeltest unterworfen.

Zur Bestimmung der Endfestigkeit wurde wiederum nach einer Ablüftzeit von 30 Minuten das Trägerteil und die zu laminierende Folie bei Raumtemperatur verpresst und die Klebeverbindung 24 Stunden nach dem Verpressen einem 90° Peeltest unterworfen.

Zur Bestimmung der Langzeitwärmefestigkeit wurde ebenfalls nach 30 Minuten Ablüftzeit bei Raumtemperatur die zu laminierende Folie mit dem Trägerteil verpresst. Danach erfolgte eine Aushärtung während 24 Stunden bei Raumtemperatur. Nachfolgend wurde die Klebeverbindung im Wärmeschrank bei 90° C statisch mit 100 g Gewicht im Winkel von 90° auf Zug belastet (90° Peeltest). Nach 14 Tagen Belastung wurde die Abschälstrecke (in mm) bestimmt.

Bei allen Festigkeitstests wurden hinsichtlich Druck, Temperatur und Presszeit anwendungsübliche Bedingungen gewählt. Das verwendete Trägerteil war ebenfalls ein anwendungsübliches Substrat.

Die Ergebnisse sind in der nachstehenden Tabelle angegeben:

| | Beispiel 1 | Beispiel 2 | Beispiel 3 |
|---|---|---|---|
| Langzeitwärmefestigkeit | 22d 8mm | 5d 100mm | <24h 100mm |
| Viskositätsänderung | 12h 15% | 10h 18,5% | 8h 100% |
| Anfangsfestigkeit | 12 N/3cm | 10 N/3cm | 8 N/3cm |
| Endfestigkeit | 60 N/3cm | 40 N/3cm | 60 n/3cm |

Es zeigte sich, daß die erfindungsgemäßen Dispersionen (Beispiele 1 und 2) eine sehr viel bessere Langzeitwärmefestigkeit und eine sehr viel längere Topfzeit haben, wobei auch die Anfangsfestigkeit besser ist als bei der bekannten Dispersion des Vergleichsbeispiels 3. Die erfindungsgemäße Dispersion des Beispiels 1 erreicht die gleiche, die des Beispiels 2 eine etwas geringere Endfestigkeit wie die Dispersion des Vergleichsbeispiels 3.

## Patentansprüche

1. Wässrige Dispersion zur Herstellung eines wenigstens zweikomponentigen polyurethanmodifizierten Dispersionsklebstoffs, insbesondere zum Kaschieren von Textilien, Folien und dergleichen auf Träger, mit einem Gehalt wenigstens einer hydroxylgruppenhaltigen Polymerverbindung zur Reaktion mit einem, der Dispersion zuzusetzenden dispergierbaren Härter, der eine di- oder polyfunktionelle Isocyanatverbindung umfaßt, wobei die Dispersion eine von Ethylenvinylacetat (EVA) bzw. (Meth)acrylsäure(derivat) abgeleitete (Co)polymerverbindung enthält,
**gekennzeichnet durch** einen Gehalt an einem, insbesondere nicht hydrophoben, Weichmacher.

2. Wässrige Dispersion zur Herstellung eines wenigstens zweikomponentigen polyurethanmodifizierten Dispersionsklebstoffs, insbesondere zum Kaschieren von Textilien, Folien und dergleich auf Träger, mit einem Gehalt wenigstens einer hydroxylgruppenhaltigen Polymerverbindung zur Reaktion mit einem, der Dispersion zuzusetzenden dispergierbaren Härter, der eine di- oder polyfunktionelle Isocyanatverbindung umfaßt,
**dadurch gekennzeichnet,** daß die Dispersion wenigstens eine von Ethylenvinylacetat (EVA) und weiterhin wenigstens eine von (Meth)acrylsäure(derivat) abgeleitete (Co)polymerverbindung enthält.

3. Dispersion nach Anspruch 1
**dadurch gekennzeichnet,** daß der Weichmacher estergruppenhaltig ist und insbesondere wenigstens eine Phthalsäureesterverbindung, insbesondere eine Butyl- bzw. Benzylphthalatverbindung umfaßt.

4. Dispersion nach einem der Ansprüche 1 bis 3,
**gekennzeichnet durch** einen Gehalt eines Polyesterurethans insbesondere auf Basis wenigstens einer aliphatischen Isocyanatverbindung.

5. Dispersion nach einem der Ansprüche 1 bis 4,
**gekennzeichnet durch** einen Gehalt mehrerer unterschiedlicher EVA Copolymerisate.

6. Dispersion nach einem der Ansprüche 1 bis 5,
**dadurch gekennzeichnet,** daß die Dispersion wenigstens eine von Ethylenvinylacetat (EVA) und zusätzlich wenigstens eine von (Meth)acrylsäure(derivat) abgeleitete (Co)polymerverbindung enthält.

7. Dispersion nach einem der vorstehenden Ansprüche,
**dadurch gekennzeichnet,** daß sie ein (Meth)acrylat und/oder ein hydroxylgruppenhaltiges Polyacrylnitril enthält.

8. Dispersion nach einem der vorstehenden Ansprüche,
**gekennzeichnet durch** folgende Gehalte an Dispersionsbestandteilen
| | bevorzugt | bes. bevorzugt |
|---|---|---|
| PU-Dispersion | 5-25% | 15-20% |
| EVA-Dispersion | 40-80% | 65-75% |
| Acrylat-Dispersion | 5-30% | 5-10% |
| Weichmacher | 5-15% | 5-10% |
gegebenenfalls neben üblichen Stabilisatoren, Farb- und Hilfsstoffen.

## Claims

1. Aqueous dispersion for producing a polyurethane-modified dispersion adhesive which consists of at least two components, in particular for coating textiles, sheeting and the like on carriers, having a content of at least one hydroxyl group-containing polymer compound for reacting with a dispersible hardener which is to be added to the dispersion and which comprises a di- or polyfunctional isocyanate compound, wherein the dispersion contains a (co)polymer compound which is derived from ethylene vinyl acetate (EVA) or (meth)acrylic acid (derivative), characterized by a content of softener, especially a non-hydrophobic softener.

2. Aqueous dispersion for producing a polyurethane-modified dispersion adhesive which consists of at least two components, in particular for coating textiles, sheeting and the like on carriers, having a content of at least one hydroxyl group-containing polymer compound for reacting with a dispersible hardener which is to be added to the dispersion and which comprises a di- or polyfunctional isocyanate compound, characterized in that the dispersion contains at least one (co)polymer compound which is derived from ethylene vinyl acetate (EVA) and in addition at least one (co)polymer compound derived from (meth)acrylic acid (derivative).

3. Dispersion according to claim 1 characterized in that the softener contains ester groups and in particular contains at least one phthalic acid ester compound, in particular a butyl or benzyl phthalate compound.

4. Dispersion according to any one of claims 1 to 3, characterized by a content of a polyester urethane in particular on the basis of at least one aliphatic isocyanate compound.

5. Dispersion according to any one of claims 1 to 4, characterized by a content of several different EVA copolymerisates.

6. Dispersion according to any one of claims 1 to 5, characterized in that the dispersion contains at least one (co)polymer compound which is derived from ethylene vinyl acetate (EVA) and in addition at least one (co)polymer compound derived from (meth)acrylic acid (derivative).

7. Dispersion according to any one of the preceding claims, characterised in that it contains a (meth)acrylate and/or a hydroxyl group-containing polyacrylnitril.

8. Dispersion according to any one of the preceding claims, characterized by the following levels of dispersion components:
| | preferred | particularly preferred |
|---|---|---|
| PU dispersion | 5-25% | 15-20% |
| EVA dispersion | 40-80% | 65-75% |
| Acrylate dispersion | 5-30 % | 5-10% |
| Softener | 5-15% | 5-10% |
where necessary in addition to the usual stabilizers, dyes and auxiliary agents.

## Revendications

1. Dispersion aqueuse pour la fabrication d'une dispersion-adhésive à au moins deux composants de type polyuréthane modifiés, en particulier pour l'enduction ou le dépôt sur textiles (« kaschieren »), feuilles et similaires sur des supports , qui contient au moins une liaison de type polymère contenant des groupes hydroxyles pour la réaction avec un durcisseur dispersible ajouté à la dispersion, qui comprend une liaison isocyanate di ou polyfonctionnelle, grâce à quoi la dispersion contient une liaison de type (co)polymérique dérivée à partir d'éthylènevinylacétate (EVA) respectivement d'un (dérivé) d'acide (meth)acrylique, **caractérisée** par une teneur en un plastifiant (« Weichmacher ») en particulier non hydrophobe.

2. Dispersion aqueuse pour la fabrication d'une dispersion-adhésive à au moins deux composants de type polyuréthane modifiés, en particulier pour l'enduction ou le dépôt sur textiles, feuilles et similaires sur des supports, qui contient au moins une liaison de type polymère contenant des groupes hydroxyles pour la réaction avec le durcisseur dispersible ajouté à la dispersion, qui comprend une liaison isocyanate di ou polyfonctionnelle, **caractérisée** en ce que la dispersion comprend au moins une liaison de type (co)polymère dérivée à partir d'au moins un éthylènevinylacétate (EVA) et en outre à partir d'au moins un (dérivé) d'acide (meth) acrylique.

3. Dispersion selon la revendication 1 **caractérisée** en ce que le plastifiant contient des groupes esters et en particulier au moins une liaison ester d'acide phtalique, comprend en particulier une liaison de type butyle respectivement benzylphtalate.

4. Dispersion selon l'une des revendications 1 à 3, **caractérisée** par une teneur d'un polyester uréthane en particulier sur la base d'au moins une liaison aliphatique du type isocyanate.

5. Dispersion selon l'une des revendications 1 à 4, **caractérisée** par une teneur en plusieurs copolymérisats de type EVA différents.

6. Dispersion selon l'une des revendications 1 à 5, **caractérisée** en ce que la dispersion contient au moins une liaison de type (co)polymère dérivée à partir d'éthylènevinylacétate (EVA) et additionnellement à partir d'au moins un (dérivé) d'acide (meth) acrylique.

7. Dispersion selon l'une des revendications précédentes **caractérisée** en ce qu'elle contient un (meth)acrylate et/ou un polyacrylnitrile contenant des groupes hydroxyles.

8. Dispersion selon l'une des revendications précédentes **caractérisée** par les teneurs suivantes en composants de base
| | de préférence | plus préférentiellement |
|---|---|---|
| PU Dispersion | 5-25% | 15-20 % |
| EVA Dispersion | 40-80 % | 65-75 % |
| Dispersion d'acrylate | 5-30 % | 5-10 % |
| Plastifiant | 5-15 % | 5-10 % |
éventuellement avec en outre d'autres constituants convenables de type stabilisants, des colorants et des adjuvants classiques.
